(19) Europäisches Patentamt
European Patent Office
Office européen des brevets

(11) Numéro de publication: **0 247 950 B1**

# (12) FASCICULE DE BREVET EUROPEEN

(45) Date de publication du fascicule du brevet: **31.10.90**

(51) Int. Cl.[5]: **C08L 83/04**
// (C08L83/04, 83:08)

(21) Numéro de dépôt: **87420111.4**

(22) Date de dépôt: **23.04.87**

(54) **Composition monocomposante diorganopolysiloxane stabilisée par un diorganopolysiloxane porteur de groupe isocyanate.**

(30) Priorité: **28.04.86 FR 8606367**

(43) Date de publication de la demande:
**02.12.87 Bulletin 87/49**

(45) Mention de la délivrance du brevet:
**31.10.90 Bulletin 90/44**

(84) Etats contractants désignés:
**AT BE CH DE ES FR GB GR IT LI LU NL SE**

(56) Documents cités:
**EP-A- 0 113 849**
**US-A- 4 495 331**
**US-A- 4 523 001**

(73) Titulaire: **RHONE-POULENC CHIMIE, 25, quai Paul Doumer, F-92408 Courbevoie Cédex(FR)**

(72) Inventeur: **Gay, Michel, 11, rue Garibaldi, F-69006 Lyon(FR)**
Inventeur: **Letoffe, Michel, 5, avenue de Limburg, F-69110 Sainte-Foy-Les-Lyon(FR)**
Inventeur: **Peccoux, Pierre Michel, 71, rue Henri Gorjus, F-69004 Lyon(FR)**

(74) Mandataire: **Seugnet, Jean Louis et al, RHONE-POULENC INTERSERVICES Service Brevets Chimie Centre de Recherches de Saint-Fons B.P. 62, F-69192 Saint-Fons Cédex(FR)**

EP 0 247 950 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne une composition monocomposante diorganopolysiloxane présentant une stabilité améliorée quand elle est conservée à l'abri de l'humidité et réticulant à température ambiante (c'est-à-dire habituellement à 5-35 °C) en présence d'eau et son procédé de préparation. Une telle composition sera dénommée par la suite composition EVF (composition élastomérique vulcanisable à froid).

Ces compositions sont préparées par mélange principalement de polymères diorganopolysiloxanes hydroxylés, de charges, de silanes polyalcoxylés particuliers, de composés aminés organiques ou organosiliciques et de carboxylates ou chelates, métalliques ou organométalliques.

Des compositions préparées par mélange de constituants proches de ceux énumérés ci-dessus sont connues. Certaines de ces compositions ne sont pas stables au stockage ; elles sont alors appelées bicomposantes du fait qu'elles doivent être conditionnées dans deux emballages différents avec, par exemple, les polymères diorganopolysiloxanes hydroxylés, les charges et les silanes alcoxylés dans l'un des emballages et les composés aminés et les sels métalliques dans l'autre emballage.

Cette présentation en deux emballages n'est pas très pratique (surtout pour les applications dans le bâtiment qui sont bien souvent effectuées à l'air libre) étant donné qu'il faut mélanger soigneusement le contenu de l'un des emballages avec le contenu de l'autre seulement au moment de l'emploi et utiliser immédiatement la totalité des compositions formées.

Des compositions de ce type figurent plus spécialement dans le brevet belge 774 830, les brevets français 2 152 908 et 2 228 814.

Le brevet belge 774 830 décrit des compositions préparées par mélange de diorganopolysiloxanes hydroxylés ou alcoxylés, de silanes (ou de polysiloxanes) alcoxylés, d'aminoalkylpolysiloxanes linéaires ayant au moins un radical aminoalkyle et au moins un radical alcoxyle, et de catalyseurs de durcissement.

Le brevet français 2 152 908 décrit des compositions préparées par mélange de diorganopolysiloxanes hydroxylés, de silanes (ou de polysiloxanes) alcoxylés, de charges, d'aminoorganosilanes à radicaux hydrolysables et de catalyseurs de durcissement.

Le brevet français 2 228 814 décrit des compositions préparées par mélange de diorganopolysiloxanes hydroxylés, de résines méthylpolysiloxaniques, de charges, d'aminoorganosilanes (ou aminoorganopolysiloxanes) alcoxylés et éventuellement de silicates ou polysilicates d'alkyle.

D'autres compositions sont stables au stockage, elles sont appelées monocomposantes et sont conditionnées en un seul emballage.

Des compositions de ce type figurent par exemple dans les brevets américains 3 161 614, 3 170 894, 3 686 357 et la demande japonaise publiée 53/102 956.

Les brevets américains 3 161 614 et 3 170 894 décrivent des compositions préparées par mélange de diorganopolysiloxanes bloqués à chaque extrémité de leur chaîne par un motif polyalcoxysiloxyle et de catalyseurs de durcissement tels que des amines organiques ou organosiliciques. Ces compositions utilisent des diorganopolysiloxanes peu accessibles, obtenus principalement par action de chloroalcoxysilanes sur des diorganopolysiloxanes hydroxylés ; en outre elles durcissent lentement à l'air ce qui implique de stocker dans les ateliers, au moins pendant plusieurs jours, les assemblages jointoyés à l'aide de ces compositions.

Le brevet américain 3 686 357 décrit des compositions préparées par mélange de diorganopolysiloxanes bloqués à chaque extrémité de leur chaîne par un motif polyalcoxysiloxyle, d'aminoalkylpolysiloxanes linéaires également bloqués à chaque extrémité de leur chaîne par un motif polyalcoxysiloxyle et de catalyseurs de durcissement. Ces compositions utilisent deux sortes de polysiloxanes dont la préparation, pour chaque sorte, exige une étape spéciale. Par ailleurs elles ont tendance à augmenter de viscosité au cours de leur stockage ; cette augmentation gêne considérablement leur extrusion au travers des canules des cartouches dans lesquelles elles sont habituellement conditionnées.

La demande japonaise 53/102 956 décrit des compositions préparées par mélange d'organopolysiloxanes ayant chacun au moins deux atomes de silicium liés à des groupes alcoxyles, de systèmes réticulants provenant du chauffage de silanes (ou polysiloxanes) alcoxylés avec des sels d'étain d'acides carboxyliques, et d'aminoorganosilanes alcoxylés. Ces compositions utilisent d'une part des organopolysiloxanes d'un accès plus difficile que les organopolysiloxanes hydroxylés et d'autre part des systèmes réticulants dont la préparation nécessite une étape de chauffage.

Le brevet européen EP-A-21 859 a permis de faire un progrès important en proposant une composition EVF monocomposante pouvant se faire en une seule étape en partant directement de polymères de base diorganopolysiloxanes hydoxylés et de polyalcoxysilanes spécifiques. Selon ce brevet la fonctionnalisation du polymère de base hydroxylé peut se faire au moyen d'un silane organofonctionnel qui joue également le rôle d'agent d'adhérence.

Ces compositions monocomposantes peuvent présenter toutefois une stabilité au stockage insuffisante.

Selon des demandes de brevets publiées récemment (EP-A-69 256, EP-A-104 179 et FR-A-2 543 562) cette stabilité déficiente serait due à la présence de silanols résiduels provenant du polymère de base hydroxylé et qui n'auraient pas réagi sur les polyalcoxysilanes.

Ainsi les demandes de brevets européens EP-A-69 256, EP-A-104 179 et la demande de brevet français FR-A-2 543 562 proposent, en vue d'éliminer ces silanols résiduels, de rajouter à la composition EVF un "scavenger" qui peut être respectivement un silane présentant un groupe hydrolysable labile réagissant préférentiellement sur les motifs silanols résiduels, un polysilazane et un composé organique ayant au moins un groupe fonctionnel réagissant avec le groupe silanol.

Tel qu'utilisé ci-après, le terme "stable" appliqué à une composition EVF d'organopolysiloxane à terminaisons alcoxy monocomposante de la présente invention désigne un mélange durcissable à l'humidité capable de rester pratiquement inchangé lorsqu'il est protégé de l'humidité atmosphérique et qui durcit en un élastomère non collant au toucher même après une période de stockage prolongée. De plus, une composition EVF stable signifie aussi que le temps jusqu'à l'état non collant au toucher présenté par les ingrédients d'une composition EVF fraîchement mélangés dans les conditions atmosphériques sera pratiquement le même que celui présenté par le même mélanger d'ingrédients soumis à l'humidité atmosphérique après avoir été conservé dans un récipient exempt d'humidité et résistant à l'humidité pendant une période prolongée de stockage aux conditions ambiantes, ou une période équivalente basée sur un vieillissement accéléré à une température élevée.

Après de longues et coûteuses recherches, la Demanderesse a pu mettre en évidence que la dégradation au stockage des compositions EVF semble plus due à la présence simultanée dans les compositions EVF d'une part du catalyseur de condensation à base d'un métal en particulier l'étain et d'autre part du catalyseur de fonctionnalisation des huiles hydroxylées à savoir une amine primaire ou secondaire catalysant la réaction du polymère de base hydroxylé sur le polyalcoxysilane, même si ce catalyseur ne se trouve qu'en très faibles quantités au sein de la composition EVF.

La présente invention a permis de résoudre le problème par ajout à une composition EVF d'une quantité stabilisatrice d'au moins un diorganopolysiloxane de formule :

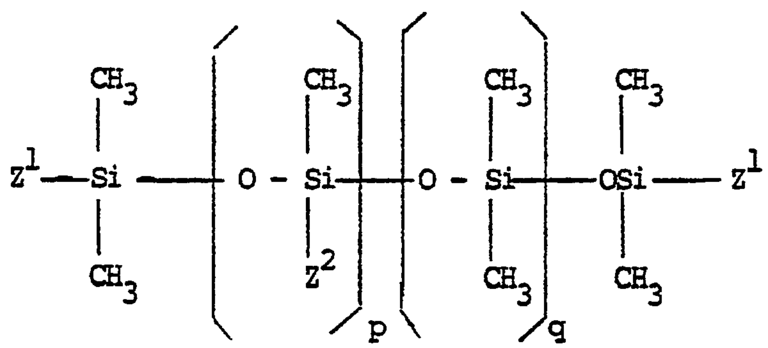

(1)

dans laquelle :

- p est un nombre entier compris entre 1 et 6 inclus, de préférence entre 2 et 4 inclus,
- q est un nombre entier compris entre 0 et 500, de préférence entre 5 et 50 inclus,
- $Z^1$ identiques ou différents représentent un radical méthyle ou un radical $Z^2$,
- $Z^2$ est un radical de formule :

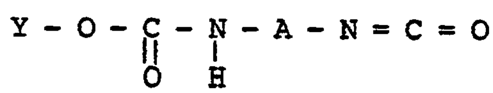

dans laquelle :

- Y est un chaînon alkylène linéaire ou ramifié ayant de 1 à 18 atomes de carbone, éventuellement prolongé par un chaînon polyéther choisi parmi le polyoxyde d'éthylène et le polyoxyde de propylène,
- A est un radical hydrocarboné divalent comportant de 2 à 20 atomes de carbone inclus et qui constitue un reste hydrocarboné d'une molécule de diisocyanate,
- A peut donc être un radical hydrocarboné divalent choisi parmi un chaînon alkylène linéaire, ramifié ou cyclique, ayant de 2 à 15 atomes de carbone inclus, et un radical arylène en $C_6$-$C_{20}$ comportant au plus deux noyaux insaturés en $C_6$.

De préférence dans la formule (1) les motifs méthylsiloxane greffés par un isocyanate sont séparés par au moins 1, de préférence au moins 2 motifs diméthylsiloxane. Dans ce cas le copolymère de formule (1) peut être alterné ou statistique.

Comme exemples de radical Y on peut citer les radicaux de formules :

$-CH_2-$, $-(CH_2)_2-$, $-(CH_2)_3-(O-CH_2-CH_2)-_n$, $-(CH_2)_3-$,

$-(CH(CH_3)CH_2-$, $-(CH_2)_3-(O-CH_2-CH(CH_3))-_n$, $-CH_2-CHCH_3-CH_2-$,

avec n représentant un nombre entier compris entre 5 et 50.

Comme exemples de radicaux A on peut citer ceux de formules :

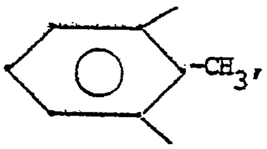
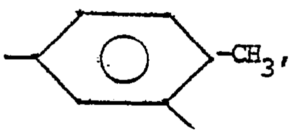
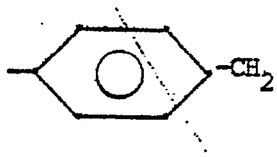
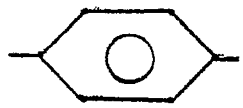

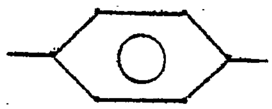

De façon surprenante et inattendue et à la différence des stabilisants décrits dans les brevets EP-A-69 256, EP-A-104 179 et FR-A-2 543 562, le stabilisant de formule (1) ne réagit pas sur les fonctions silanol ou alcool résiduelles mais ne réagit que sur les fonctions amines primaires et secondaires du catalyseur de fonctionnalisation.

Conformément à la présente invention on a trouvé que l'élimination de ces seules fonctions amines permet de stabiliser efficacement les compositions EVF. Par ailleurs les stabilisants selon l'invention sont parfaitement compatibles avec les silicones, ne sont pas toxiques et ne colorent pas, par chauffage, les compositions EVF et peut également jouer le rôle de plastifiant.

La présente invention permet donc d'éliminer les fonctions amines primaires et secondaires du catalyseur de fonctionnalisation sans passer nécessairement par l'étape coûteuse de dévolatilisation par chauffage sous pression réduite de la composition EVF. Cette dévolatilisation par ailleurs ne chasse qu'imparfaitement le catalyseur surtout si ce dernier est peu volatil.

Dans ce qui suit, sauf mentions contraires, les pourcentages et parties sont en poids.

La présente invention vise plus spécifiquement une composition d'organopolysiloxane vulcanisable à température ambiante monocomposante stable au stockage en absence d'humidité et transformable en élastomère en présence d'humidité, caractérisée en ce qu'elle comporte:

(i) - 100 parties d'au moins un polymère diorganopolysiloxane de formule:

$R^2_{3-a}R^1_aSi(OSiR_2)_rOSiR^1_aR^2_{3-a}$ (2)

dans laquelle R identiques ou différents représentent des radicaux hydrocarbonés ayant de 1 à 10 atomes de carbone éventuellement substitués par des atomes d'halogène ou des groupes cyano, $R^1$ identiques ou différents représentant des radicaux hydrocarbonés en $C_1$-$C_{10}$, $R^2$ identiques ou différents représentent des radicaux alcoxy ou polyalcoxy de formulez ZO ou ZOEO, dans lesquelles Z représente un radical alkyle en $C_1$-$C_4$, E un radical alkylène linéaire ou ramifié en $C_2$-$C_4$, a représente zéro ou 1 et le symbole r un nombre ayant une valeur suffisante pour conférer au polymère de formule (2) une viscosité de 500 à 1 000 000 de mPa.s à 25°C.

(2i) - 0 à 15 parties d'au moins un polyalcoxysilane de formule:

$R^1_aSiR^2_{3-a}$ (3)

dans laquelle $R^1$, $R^2$ et a ont la signification ci-dessus.

(3i) - 0 à 250 parties de charges minérales.

(4i) - 0,001 à 3 parties d'un catalyseur de condensation.

(5i) - 0,001 à 15 parties d'au moins un composé aminé porteur d'au moins une fonction amine primaire ou secondaire choisi parmi les amines organiques ayant un pkb en milieux aqueux inférieur à 5 et les aminorganosilanes et aminoorganopolysiloxanes portant par molécule à la fois:

. au moins un groupe organique en $C_3$-$C_{15}$ lié par une liaison SiC à l'atome de silicium et porteur d'au moins une fonction amino,

. - et au moins un radical alcoxy en $C_1$-$C_5$ ou un radical alcoxyalkylèneoxy en $C_3$-$C_6$, dont les fonctions amines ont été neutralisées par au moins un stabilisant de formule (1).

Le polymère (i) de formule (2) est préparé par mise en contact d'un polymère alpha, oméga-dihydroxydiorganopolysiloxane de formule:

$H-(OSiR_2)r-OH$

avec un polyalcoxysilane de formule (3) dans lesquelles R, $R^1$ et $R^2$ ont la signification ci-dessus à raison d'au moins deux moles de polyalcoxysilane pour une mole de polysiloxane hydroxylé.

Cette réaction a lieu en présence d'au moins un composé aminé tel que défini en (5i), par exemple une amine organique primaire ou secondaire (brevet américain US-A 3 542 901 et le brevet européen EP-A 21 859), une aminoorganosilane (EP-A 21 859).

Les polymères alpha, oméga-dihydroxydiorganopolysiloxanes de viscosité 700 à 1 000 000 mPa.s à 25°C, de préférence 1 000 à 700 000 mPa.s à 25°C, sont des polymères linéaires, constitués essentiellement de motifs diorganosiloxy de formule précitée $R_2SiO$, et bloqués à chaque extrémité de leur chaîne par un groupe hydroxyle ; toutefois, la présence de motifs monoorganosiloxy de formule $RSiO_{1,5}$ et/ou de motifs siloxy de formule $SiO_2$, n'est pas exclue dans la proportion d'au plus 2 % par rapport au nombre de motifs diorganosiloxy.

Les radicaux hydrocarbonés, ayant de 1 à 10 atomes de C, substitués ou non par des atomes d'halogènes ou des groupes cyano, représentés par les symboles R, englobent :

- les radicaux alkyles et halogénoalkyles ayant de 1 à 10 atomes de carbone tels que les radicaux méthyle, éthyle, propyle, isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle.
- les radicaux cycloalkyles et halogénocycloalkyles ayant de 1 à 10 atomes de carbone tels que les radicaux cyclopentyle, cyclohexyle, méthylcyclohexyle, propylcyclohexyle, difluoro-2,3 cyclobutyle, difluoro-3,4 méthyl-5 cycloheptyle.
- les radicaux alcényles ayant de 2 à 4 atomes de carbone tels que les radicaux vinyle, allyle, butène-2 yle.
- les radicaux aryles et halogénoaryles mononucléaires ayant de 6 à 10 atomes de carbone tels que les radicaux phényle, tolyle, xylyle, chlorophényle, dichlorophényle, trichlorophényle.
- les radicaux cyanoalcoyles dont les chaînons alcoyles ont de 2 à 3 atomes de carbone tels que les radicaux β-cyanoéthyle et -cyanopropyle.
- les radicaux méthyle, phényle, vinyle et trifluoro-3,3,3 propyle sont les radicaux préférés.

A titre d'exemples concrets de motifs représentés par la formule $R_2SiO$ on peut citer ceux de fomules :
$(CH_3)_2SiO$,
$CH_3(CH_2=CH)SiO$
$CH_3(C_6H_5)SiO$
$(C_6H_5)_2SiO$,
$CF_3CH_2CH_2(CH_3)SiO$
$NC-CH_2CH_2(CH_3)SiO$
$NC-CH(CH_3)CH_2(CH_2=CH)SiO$
$NC-CH_2CH_2CH_2(C_6H_5)SiO$

Il doit être compris que l'on peut utiliser comme polymère un mélange constitué de polymères alpha, oméga-dihydroxydiorganopolysiloxanes qui diffèrent entre eux par le poids moléculaire et/ou la nature des groupements liés aux atomes de silicium.

Ces polymères alpha, oméga-dihydroxydiorganopolysiloxanes sont commercialisés ; en outre, ils peuvent être aisément fabriqués selon des techniques maintenant bien connues.

A titre illustratif, les polymères diorganopolysiloxanes (i) peuvent être bloqués, à chaque extrémité de leur chaîne, par des motifs de formules :
$(CH_3O)_2CH_3SiO_{0,5}$
$(CH_3O)_3SiO_{0,5}$
$(CH_3OCH_2CH_2O)_2CH_3SiO_{0,5}$
$(CH_3OCH_2CH_2O)_3SiO_{0,5}$

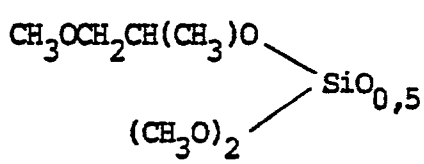

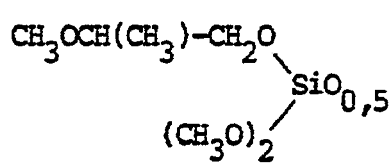

Pour 100 parties de polymère (i) de formule (2) sont utilisés de 0 à 15 parties, de préférence de 2,5 à 10 parties d'un polyalcoxysilane (2i) de formule (3) dans laquelle :
$R^1$ représente un radical hydrocarboné en $C_1$-$C_{10}$ qui englobe plus spécialement :
- les radicaux alkyle en $C_1$-$C_5$ tels que les radicaux méthyle, éthyle, propyle, isopropyle, butyle, isobutyle, tertiobutyle, n-pentyle, isopentyle,
- les radicaux alcényle en $C_2$-$C_4$ tels que les radicaux vinyle, allyle, butène-2 yle,
- les radicaux cycloalkyle en $C_5$-$C_8$ tels que les radicaux cyclopentyle, cyclohexyle, méthylcyclohexyle,
- les radicaux aryle mononucléaires en $C_6$-$C_{10}$ tels que les radicaux phényle, tolyle, xylyle.

$R^2$ identiques ou différents représentent comme indiqué ci-dessus des radicaux alcoxy ou polyalcoxy.

A titre d'exemples concrets de produit de formule (3) on peut citer ceux de formules :
$Si(OCH_3)_4$
$CH_3Si(OCH_3)_3$
$CH_3Si(OCH_2CH_2OCH_3)_3$
$Si(OCH_2CH_2OCH_3)_4$
$CH_2=CHSi(OCH_2CH_2OCH_3)_3$
$C_6H_5Si(OCH_3)_3$
$C_6H_5Si(OCH_2CH_2OCH_3)_3$
$Si(OCH_3)_2[OCH(CH_3)CH_2OCH_3]_2$
$CH_2=CHSi(OCH_3)_3$
$CH_2=CH-CH_2Si(OCH_3)_3$
$CH_2=C(CH_3)CH_2Si(OCH_3)_3$
$CH_2=CH-Si(OCH_3)_2[OCH(CH_3)CH_2OCH_3]$

Les charges (3i) sont utilisées à raison de 0 à 250 parties, de préférence de 5 à 200 parties pour 100 parties de polymère (i).

Ces charges peuvent se présenter sous la forme de produits très finement divisés dont le diamètre particulaire moyen est inférieur à 0,1 micromètre. Parmi ces charges figurent les silices de combustion et les silices de précipitation ; leur surface spécifique BET est généralement supérieure à 40 m²/g.

Ces charges peuvent également se présenter sous la forme de produits plus grossièrement divisés, de diamètre particulaire moyen supérieur à 0,1 micromètre. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre ; leur surface spécifique est généralement inférieure à 30 m²/g.

Ces charges peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysiloxanes (brevets français 1 126 884, 1 136 885, 1 236 505 ; brevet anglais 1 024 234). Les charges traitées renferment, dans la plupart des cas, de 3 à 30 % de leur poids de composés organosiliciques.

Les charges peuvent être constituées d'un mélange de plusieurs types de charges de granulométrie différente ; ainsi par exemple, elles peuvent être constituées de 30 à 70 % de silices finement divisées de surface spécifique BET supérieure à 40 m²/g et de 70 à 30 % de silices plus grossièrement divisées de surface spécifique inférieure à 30 m²/g.

Comme catalyseur de condensation (4i) on peut utiliser au moins un composé d'un métal choisi notamment parmi le fer, le plomb, l'étain, le titane et le zirconium, bien connus de l'homme de métier. L'étain est le métal préféré par exemple sous la forme de monocarboxylates et de dicarboxylates d'étain tels que l'éthyl-2 hexanoate d'étain, le dilaurate de dibutylétain, le diacétate de dibutylétain (voir le livre de NOLL "Chemistry and technology of silicone", page 337, Academic Press, 1968 - 2ème édition).

Les chelates d'étain de valence IV hexacoordinés tels que ceux décrits dans la demande de brevet européen EP-A-147 323 et le brevet US-A-4 517 337 cités comme référence sont particulièrement appropriés.

Sont également préférés, les catalyseurs de condensation qui sont un mélange d'un bis(β-dicétonate) de diorganoétain avec un dérivé organique de l'étain également de valence IV, mais exempt de fonction β-dicétonato, et possédant au moins un atome d'étain, chaque atome d'étain portant deux radicaux organiques liés par une liaison Sn-C, les deux autres valences étant satisfaites au moyen de radicaux choisis parmi les radicaux organiques ou inorganiques liés par une liaison SnO, SnS, par des atomes d'halogènes, par des groupes hydroxy et par des atomes d'oxygène.

Ces dérivés organiques de l'étain de valence IV exempts de fonction β-dicétonato peuvent être en particulier des sels d'étain répondant aux formules :

$$A_2SnR^6_2$$

$$R^6_2SnO,$$

$$AR^6_2SnOSnR^6_2A$$

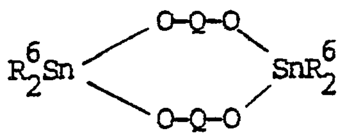

dans lesquelles :

- $R^6$ représente un radical hydrocarboné, halogéné ou non, en $C_1$-$C_{20}$,
- A représente un radical organique ou inorganique, lié à l'atome d'étain par une liaison Sn-O ou Sn-S, un atome d'halogène,
- Q représente un radical alkylène en $C_2$-$C_{10}$, A peut être choisi dans le groupe constitué :
- (e) des radicaux mono-carboxylates de formule $R^7COO$, $R^7$ étant un radical hydrocarboné, halogéné ou non, en $C_1$-$C_{20}$,
- (2e) des radicaux dicarboxylates de formule

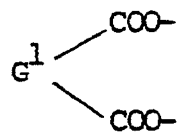

liés à un même atome d'étain ou à deux atomes d'étain conduisant aux deux formules :

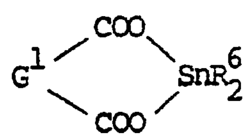

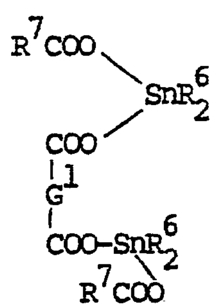

dans lesquelles $G^1$ représente un radical hydrocarboné divalent en $C_1$-$C_{15}$ et $R^7$ a la signification donnée sous (e),

- (3i) des radicaux dicarboxylates de formule $R^7OCOG^1COO$ dans laquelle $R^7$ et $G^1$ ont la signification donnée respectivement sous (e) et (2e).

Les sels d'étain ci-dessus sont bien connus et sont décrits en particulier dans l'ouvrage de NOLL précité, les brevets US-A-3 186 963, 3 862 919, le brevet belge 842 305 et le brevet britannique GB-A 1 289 900 cités comme référence. En ce qui concerne les composés aminés (5i)porteurs d'une fonction amine primaire ou secondaire on peut utiliser des amines organiques, des aminoorganosilanes et des aminoorganopolysiloxanes. Parmi les amines organiques on peut utiliser les amines aliphatiques, les amines cycloaliphatiques, les amines hétérocycliques et les amines arylaliphatiques.

On peut citer comme exemples concrets d'amines aliphatiques: la n-butylamine, l'amylamine, les amines de formules:

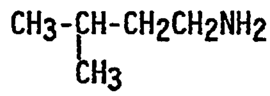

$$CH_3-CH_2-C(CH_3)_2NH_2$$

la n-hexylamine, la n-décylamine, la laurylamine, l'hexadécylamine, la n-octylamine, la di(isopropyl)amine, la di(n-butyl)amine, la di(isobutyl)amine, la di-n hexylamine, l'éthylènediamine, la propylènediamine, l'hexaméthylènediamine, les polyamines de formules:

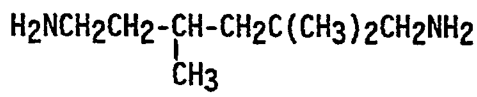

$$H(NHCH_2CH_2)_2NH_2$$

$$H(HNCH_2CH_2)_3NH_2$$

$$H_2NCH_2CH(NH_2)CH_2NH_2$$

A titre d'exemples concrets d'amines cycloaliphatiques peuvent être citées la cyclopentylamine, la cyclohexylamine, les amines de formules:

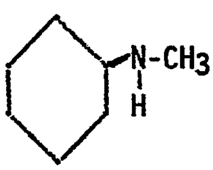

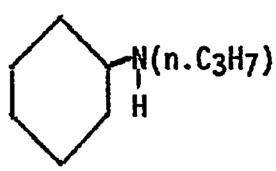

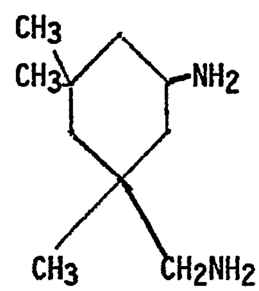

A titre d'exemples concrets d'amines hétérocycliques peuvent être citées: la pipéridine, la pyrrolidine, la pipérazine, les amines de formules:

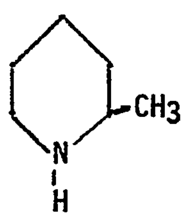

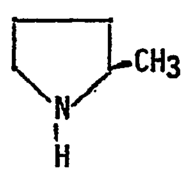

A titre d'exemples concrets d'amines arylaliphatiques peuvent être citées: la benzylamine, la phényléthylamine.

Toutes ces amines organiques sont connues ainsi que leur procédé de préparation; par ailleurs on trouve un grand nombre d'entre elles sur le marché industriel.

Les composés aminés (5i) peuvent être choisis également parmi les aminoorganosilanes et aminoorganopolysiloxanes portant par molécule au moins un groupe organique en $C_3$-$C_{15}$, lié par une liaison SiC à l'atome de silicium, et substitué par au moins un radical amino à amine primaire ou secondaire et au moins un radical alcoxy en $C_1$-$C_5$ ou alcoxyalkylènoxy en $C_3$-$C_6$.

Comme exemples concrets d'organoaminosilanes peuvent être cités ceux de formules ci-après, dans lesquelles le groupe organique substitué par au moins un radical amino est un groupe hydrocarboné:

$H_2N(CH_2)_3Si(OCH_2CH_2OCH_3)_3$
$H_2N(CH_2)_3Si(OCH_3)_3$
$H_2N(CH_2)_3Si(OC_2H_5)_3$
$H_2N(CH_2)_4Si(OCH_3)_3$
$H_2NCH_2CH(CH_3)CH_2CH_2SiCH_3(OCH_3)_2$
$H_2NCH_2Si(OCH_3)_3$
$HN(n.C_4H_9)CH_2Si(OCH_3)_3$
$H_2N(CH_2)_2NH(CH_2)_3Si(OCH_3)_3$
$H_2N(CH_2)_2NH(CH_2)_3Si(OCH_2CH_2OCH_3)_3$
$CH_3NH(CH_2)_2NH(CH_2)_3Si(OCH_3)_3$
$H(NHCH_2CH_2)_2NH(CH_2)_3Si(OCH_3)_3$

$$H_2N(CH_2)_2NH(CH_2)_3Si(OCH_3)_2$$
$$OCH(CH_2)_3CH_2OCH_3$$

$$H_2N(CH_2)_2NH(CH_2)_3SiCH{=}CH_2$$
$$(OCH_3)_2$$

La préparation de ces silanes figure plus spécialement dans des brevets américains 2 754 311, 2 832 754, 2 930 809, 2 971 864.

Comme exemples concrets d'organoaminosilanes peuvent être cités ceux de formules ci-après, dans lesquelles, le groupe organique substitué par au moins un radical amino est un groupe hydrocarboné portant des liaisons éther ou thioéther :
$H_2N(CH_2)_3O(CH_2)_3Si(OCH_2CH_2OCH_3)_3$
$H_2N(CH_2)_3O(CH_2)_3Si(OCH_3)_3$
$C_2H_5NH(CH_2)_3O(CH_2)_3Si(OCH_3)_3$
$H_2N\text{-}CH_2\text{-}CH(CH_3)CH_2O(CO_2)_3SiC_6H_5(OCH_3)_2$
$H_2N\text{-}CH_2CH_2NH(CH_2)_3O(CH_2)_3Si(OCH_3)_3$
$H_2N(CH_2)_2S(CH_2)_3Si(OCH_2CH_2OCH_3)_3$
$H_2N(CH_2)_2S(CH_2)_3Si(OCH_3)_3$
$H(NHCH_2CH_2)_2S(CH_2)_3SiCH_3(OCH_3)_2$

La préparation de ces silanes figure, en particulier, dans les brevets américains 3 341 563, 3 551 375, 3 598 853, 3 488 373.

Les aminoorganopolysiloxanes utilisables peuvent être préparés par condensation des aminoorganosilanes précités, et plus particulièrement des aminoorganosilanes trialcoxylés tels que ceux de formules:
$H_2N(CH_2)_3Si(OC_2H_5)_3$
$H_2N(CH_2)_3Si(OCH_3)_3$
$H_2N(CH_2)_2NH(CH_2)_3Si(OCH_3)_3$ avec un polymère dihydroxydiorganopolysiloxane appartenant à la classe des polymères précités de formule (4).

Des aminoorganopolysiloxanes préparés selon ce processus figurent notamment dans le brevet américain 3 686 375, la demande européenne 50 453, les brevets français 1 381 590, 1 385 693, 2 228 814.

Les compositions selon l'invention peuvent en outre, pour 100 parties de (i), contenir, pour améliorer l'adhérence de 0,5 à 10 parties d'au moins un aminoorganosilane ou aminoorganopolysiloxane (6i) portant, par molécule, au moins un groupe organique en $C_3$-$C_{15}$ lié par une liaison SiC à l'atome de silicium et substitué par au moins un radical amino à amine tertiaire et/ou un radical guanidino, comme par exemple les guanidinoorganosilanes et les guanidinoorganopolysiloxanes décrits dans le brevet américain 4 180 642, et au moins un groupe alcoxy en $C_1$-$C_5$ ou un radical alcoxyalkylèneoxy en $C_3$-$C_6$.

Comme promoteurs d'adhérence (6i) plus particulièrement appropriés sont les silanes de formule:

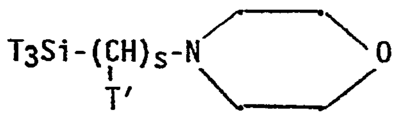

(5)

dans laquelle les radicaux T, identiques ou différents sont choisis parmi un radical alkyle et alcoxy ayant inclusivement de 1 à 4 atomes de carbone au moins deux des radicaux T étant des radicaux alcoxy, T, identiques ou différents sont choisis parmi l'atome d'hydrogène et un radical alkyle ayant inclusivement de 1 à 3 atomes de carbone et s est un nombre entier compris entre 3 et 10 inclusivement.

Comme silane de formule (5) on peut citer:

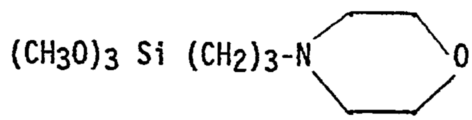

gammamorpholinopropyltriméthoxysilane

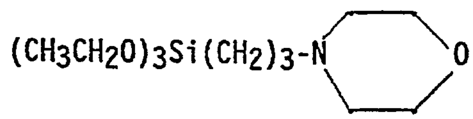

gammamorpholinopropyltriéthoxysilane.

Ces produits et leur procédé de préparation sont décrits par John L. SPEIER, I. Org. Chem., vol. 36, n° 21, 1971, page 3 120.

La présente invention vise également un procédé de préparation des compositions EVF selon lequel, dans des conditions anhydres, on prépare les polymères (i) par réaction d'une mole de polymère de formule (4) sur au moins deux moles de polyalcoxysilane (2i) en présence d'une quantité catalytiquement efficace de composé aminé tel que défini en (5i) puis après réaction et une éventuelle dévolatilisation on incorpore les composés: (2i), (3i), (4i), (5i) et (6i) ci-dessus et une quantité stabilisatrice d'au moins un stabilisant de formule (1).

Les produits de formule (1) sont pour la plupart des produits connus.

Pour préparer les produits de formule (1) on peut par exemple utiliser comme organopolysiloxane de départ le copolymère de formule :

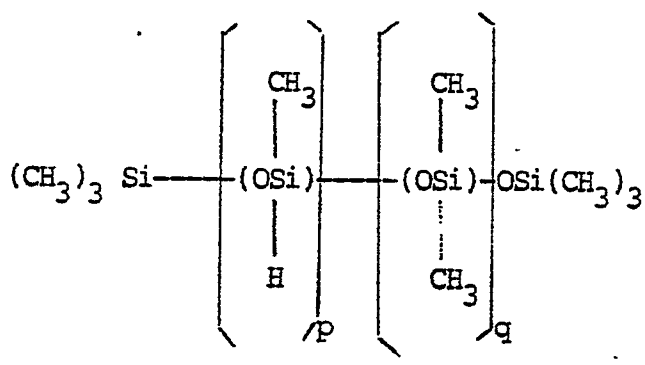

dans laquelle p et q ont la signification donnée ci-dessus.

Ces produits sont bien connus dans l'industrie des silicones et sont généralement disponibles dans le commerce. Ils sont par exemple décrits dans les brevets américains US-A-3 220 942, 3 341 111 et 3 436 366.

Sur ces hydrogénométhylpolysiloxanes on fait réagir un alcool à insaturation alcénique de formule WOH, dans laquelle W est un radical alcénylène linéaire ou ramifié ayant de 2 à 18 atomes de carbone. Parmi ces alcools on utilise plus particulièrement l'alcool allylique et méthallylique en utilisant un catalyseur d'hydrosilylation au platine conformément à l'enseignement des brevets américains US-A-2 970 150 et US-A-4 160 775.

On obtient ainsi des polysiloxanes gammahydroxyalkylés dont beaucoup sont déjà disponibles dans le commerce et sur lesquels on fait réagir les diisocyanates de formule :
OCN - A - NCO
dans laquelle A a la même signification qu'à la formule (1) en présence éventuellement d'un catalyseur.

Comme exemples de diisosyanates utilisables on peut citer le 2,4-tolylènediisocyanate, le 2,6-tolylènediisocyanate, les xylylène-diisocyanate, le 4,4'-diphénylméthane diisocyanate, le p-isocianato-benzylisocyanate, le m-phénylène-diisocyanate, le p-phénylènediisocyanate, le naphtalène-1,4 diisocyanate, le naphtalène-1,5-diisocyanate, l'éthylène diisocyanate, le propylènediisocyanate, le tétraméthylènediisocyanate, le pentaméthylènediisocyanate, l'hexaméthylènediisocyanate, le dodécaméthylène diisocyanate, le 3,3'-diisocyanatodipropyléther, le cyclopentylène-1,3diisocyanate, le cyclohexylène-1,4-diisocyanate, le furfurylidènediisocyanate.

Dans le cadre de la présente invention les diisocyanates préférés sont le 2,4-tolylènediisocyanate et le 2,6-tolylènediisocyanate et leurs mélanges quelconques.

Par quantité stabilisatrice de polymère de formule (1) on entend une quantité suffisante pour neutraliser les fonctions amine primaires et secondaires du catalyseur de fonctionnalisation, une telle quantité, que l'homme de métier n'aura aucune difficulté à déterminer, dépend du nombre de fonctions isocyanate par molécule de produit de formule (2), de la quantité d'amine utilisée, de la dévolatilisation éventuelle du polymère (i) et du caractère plus ou moins volatile de l'amine.

Pour fixer les idées, on peut par exemple utiliser avantageusement de 0,1 à 30 parties en poids de produit stabilisant de formule (1) pour 100 parties de polymère (i).

L'utilisation de grandes quantités de produit de formule (1) est sans inconvénient, compte-tenu de la parfaite compatibilité du produit stabilisant de formule (1) avec la composition EVF, ces grandes quantités, de 5 à 30 parties, peuvent avoir un rôle bénéfique de plastifiant.

-EXEMPLE 1 :

Synthèse d'un produit de fomule moyenne :

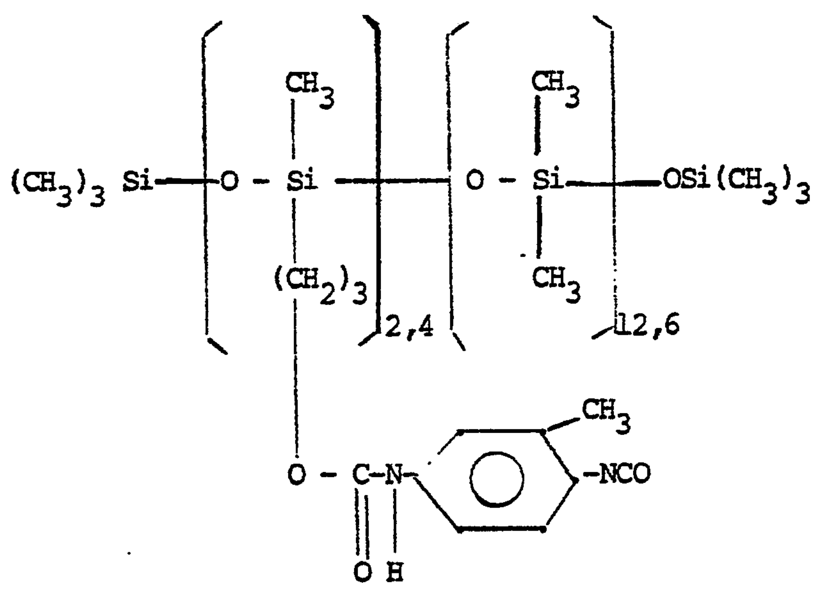

Dans un ballon tricol de 250 ml, refroidi par un bain de glace, dont l'intérieur est balayé dans un courant d'azote on introduit 30,8 g de 2,4-tolylènediisocyanate en solution dans 50 ml de toluène. On règle la température à 10 °C et on coule en dix minutes une huile silicone de formule moyenne :

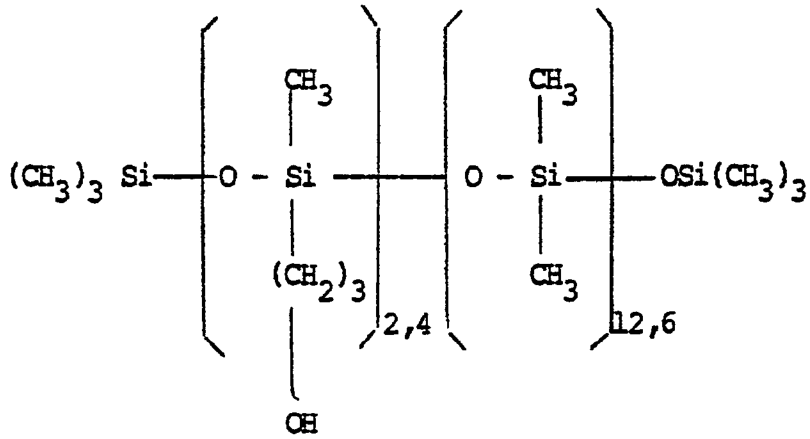

en maintenant la température à 10 °C.

On suit la réaction en dosant toutes les heures les fonctions NCO résiduels. On arrête la réaction lorsque le rapport des NCO résiduels sur les NCO initiaux (calculés en milliéquivalents) est stabilisé à une valeur de 50 % c'est-à-dire au bout de 4 heures 45 minutes. On dévolatilise le mélange réactionnel par chauffage à 50 °C pendant deux heures.

On obtient ainsi le produit souhaité sous la forme d'une huile jaune orangée légèrement trouble. La réaction est quasiment quantitative.

- <u>EXEMPLE 2 :</u>

Dans un malaxeur, on homogénéise dans des conditions anhydres :

- 100 parties d'huile alpha, oméga-dihydroxydiméthylpolysiloxane de viscosité 175 000 mPa.s à 25 °C,
- 9 parties de silicate de méthyle,
- 0,5 partie de di n-hexylamine.

On chauffe pendant 20 minutes à 80 °C tout en agitant et sans dévolatiliser on ajoute :

- 3 parties de gammamorpholinopropyltriméthoxysilane,
- 0 ou 6 parties du copolymère à fonction isocyanate obtenu à l'exemple 1,
- 30 parties de plastifiant qui est une huile diméthylpolysiloxane bloquée à chaque extrémité de la chaîne par un radical triméthylsilyle de viscosité 50 mPa.s à 25 °C,
- 9 parties de silice de combustion de surface spécifique BET 150 $m^2/g$,
- 35 parties de carbonate de calcium de diamètre particulaire moyen de 5 micromètres,
- 0,1 partie de dilaurate de dibutylétain ajouté après refroidissement du mélange.

Les compositions maintenues à l'abri de l'humidité sont divisées en deux lots.

Sur un premier lot, on étale à l'air ambiant une couche de 2 mm d'épaisseur sur une plaque de polyéthylène préalablement enduite d'un détergent commercial. Pour apprécier le temps de prise on note la durée (t) en mn et l'on obtient un toucher non collant de la couche.

Sur le film vieux de 2 ou 7 jours on mesure la dureté SHORE A (DSA 2 jours) et (DSA 7 jours), selon la norme NF-T-51109 et éventuellement la résistance à la rupture R/R en MPa selon la norme NF-T-46002 et l'allongement à la rupture A/R en % selon la norme NF-T-46002. La composition de l'autre lot est soumise au préalable à un test de vieillissement accéléré par mise en étuve en atmosphère anhydre, à une température de 100 °C et durant 2 jours (48 heures). A la fin du test, après refroidissement à température ambiante, on effectue les mesures comme pour le premier lot.

Les résultats sont rassemblés dans le tableau 1 ci-après dans lequel les quantités de stabilisant A préparé à l'exemple 1 sont notées en parties pour 100 parties d'huile hydroxylées de départ.

TABLEAU 1

| A | 0 | | 6 | |
|---|---|---|---|---|
| VIEILLISSEMENT | non | oui | non | oui |
| t/m | 40 | 45 | 40 | 30 |
| DSA 2 j. | 23 | 11 | 25 | 22 |
| DSA 7 j. | 24 | 25 | 27 | 26 |
| R/R MPa | 3,3 | 1,7 | 1,9 | 2,3 |
| AR % | 465 | 481 | 345 | 535 |

- EXEMPLE 3 :

On reproduit le mode opératoire de l'exemple 1 sauf que l'on mélange et on chauffe à 80 °C pendant 20 minutes :

- 100 parties d'huile alpha, oméga-dihydroxydiméthylpolysiloxane de viscosité 20 000 mPa.s à 25 °C,
- 9 parties de silicate de méthyle,
- 0,5 partie de di n-hexylamine.

Après refroidissement à 20-25 °C on ajoute :

- 0 ou 8 parties du même additif A de l'exemple 1,
- 2 parties de gammamorpholinopropyltriméthoxysilane,
- 10 parties de silice de combustion de surface spécifique BET 60 $m^2/g$,
- 0,15 partie de dilaurate de dibutylétain.

Les résultats sont rassemblés dans le tableau 2 ci-après.

TABLEAU 2

| A | 0 | | 8 | |
|---|---|---|---|---|
| VIEILLISSEMENT | non | oui | non | oui |
| t/m | 22 | 25 | 15 | 15 |
| DSA 2 j. | 22 | 10 | 22 | 25 |
| DSA 7 j. | 32 | 14 | 29 | 30 |
| R/R MPa | 1,7 | 1,4 | 1,8 | 2,0 |
| AR % | 251 | 477 | 320 | 291 |

Des tableaux 1 et 2 apparaît clairement l'action stabilisatrice du produit A.

**Revendications**

1. Composition d'organopolysiloxane vulcanisable à température ambiante monocomposante stable au stockage en absence d'humidité et transformable en élastomère en présence d'humidité, caractérisée en ce qu'elle comporte:

(i) - 100 parties d'au moins un polymère diorganopolysiloxane de formule:

$R^2{}_{3-a}\,R^1{}_a\,Si(OSiR_2)_rOSiR^1{}_a\,R^2{}_{3-a}$ (2)

dans laquelle R identiques ou différents représentent des radicaux hydrocarbonés ayant de 1 à 10 atomes de carbone éventuellement substitués par des atomes d'halogène ou des groupes cyano, $R^1$ identiques ou différents représentant des radicaux hydrocarbonés en $C_1$-$C_{10}$, $R^2$ identiques ou différents représentent des radicaux alcoxy ou polyalcoxy de formules ZO ou ZOEO, dans lesquelles Z représente un radical alkyle en $C_1$-$C_4$, E un radical alkylène linéaire ou ramifié en $C_2$-$C_4$, a représente zéro ou 1 et le symbole r un nombre ayant une valeur suffisante pour conférer au polymère de formule (2) une viscosité de 500 à 1 000 000 de mPa.s à 25°C.

(2i) - 0 à 15 parties d'au moins un polyalcoxysilane de formule:

$R^1_a Si R^2_{3-a}$ (3)

dans laquelle $R^1$, $R^2$ et a ont la signification ci-dessus.
(3i) – 0 à 250 parties de charges minérales.
(4i) – 0,001 à 3 parties d'un catalyseur de condensation.
(5i) – 0,001 à 15 parties d'au moins un composé aminé porteur d'au moins une fonction amine primaire ou secondaire choisi parmi les amines organiques ayant un pkb en milieux aqueux inférieure à 5 et les aminoorganosilanes et aminoorganopolysiloxanes portant par molécule à la fois:
au moins un groupe organique en $C_3$-$C_{15}$ lié par une liaison SiC à l'atome de silicium et porteur d'au moins une fonction amino,
– et au moins un radical alcoxy en $C_1$-$C_5$ ou un radical alcoxyalkylèneoxy en $C_3$-$C_6$, dont les fonctions amines ont été neutralisées par au moins un stabilisant de formule:

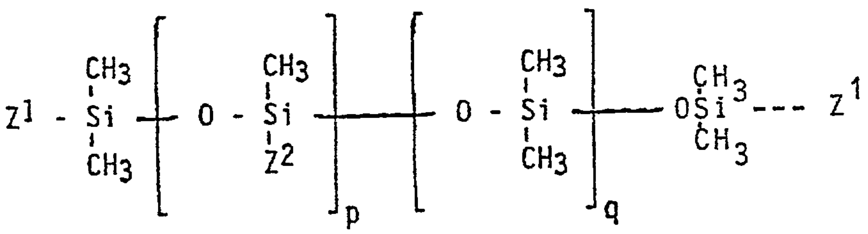 (1)

dans laquelle:
– p est un nombre entier compris entre 1 et 6 inclus, de préférence entre 2 et 4 inclus,
– q est un nombre entier compris entre 0 et 500, de préférence entre 5 et 50 inclus,
– $Z^1$ identiques ou différents représentent un radical méthyle ou un radical $Z^2$,
– $Z^2$ est un radical de formule:

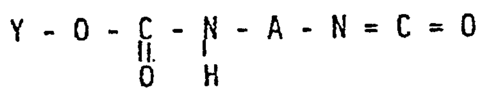

dans laquelle:
– Y est un chaînon alkylène linéaire ou ramifié ayant de 1 à 18 atomes de carbone, éventuellement prolongé par un chaînon polyéther choisi parmi le polyoxyde d'éthylène et le polyoxyde de propylène,
– A est un radical hydrocarboné divalent comportant de 2 à 20 atomes de carbone inclus et qui constitue un reste hydrocarboné d'une molécule de diisocyanate.

2. Composition selon la revendication 1, caractérisée en ce que dans la formule (1) $Z^1$ est méthyle et A est choisi parmi:

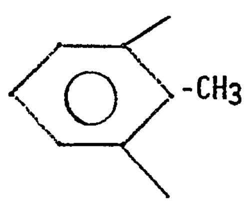 et 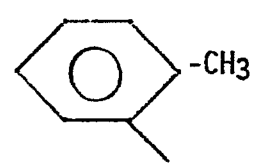

3. Composition selon la revendication 2, caractérisée en ce que Y est choisi parmi

$-(CH_2)_3-$ et 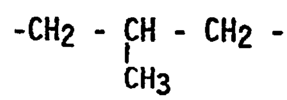

4. Composition selon l'une des revendications 1 à 3, caractérisée en ce qu'on utilise de 0,1 à 30 parties de composé stabilisant de formule (1).

5. Composition selon l'une quelconque des revendications précédentes, caractérisée en ce que (4i) est un composé de l'étain.

6. Composition selon l'une quelconque des revendications précédentes, caractérisée en ce qu'elle comporte en outre de 0,5 à 10 parties d'au moins un composé (6i) aminoorganosilane ou aminoorganopolysiloxane portant, par molécule, au moins un groupe organique en $C_3$-$C_{15}$ lié par une liaison SiC à l'atome de silicium et substitué par au moins un radical amino à amine tertiaire et/ou un radical guanidino et au moins un groupe alcoxy en $C_1$-$C_5$ ou un radical alcoxyalkylèneoxy en $C_3$-$C_6$.

7. Composition selon la revendication 6, caractérisée en ce que le composé (6i) répond à la formule:

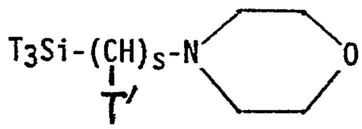

dans laquelle les radicaux T, identiques ou différents sont choisis parmi un radical alkyle et alcoxy ayant inclusivement de 1 à 4 atomes de carbone au moins deux des radicaux T étant des radicaux alcoxy, T, identiques ou différents sont choisis parmi l'atome d'hydrogène et un radical alkyle ayant inclusivement de 1 à 3 atomes de carbone et s est un nombre entier compris entre 3 et 10 inclusivement.

**Patentansprüche**

1. Bei Raumtemperatur vulkanisierbare Einkomponentenorganopolysiloxan-Zusammensetzung, die gegenüber einer Lagerung in Abwesenheit von Feuchtigkeit stabil ist, und in Anwesenheit von Feuchtigkeit in ein Elastomeres überführbar ist, dadurch gekennzeichnet, daß sie enthält:

(i) 100 Teile zumindest eines Diorganopolysiloxanpolymeren der Formel

$R^{2}_{3-a} R^{1}_{a} Si(OSiR_2)_rOSiR^{1}_{a}R^{2}_{3-a}$ (2)

worin R, gleich oder voneinander verschieden, Kohlenwasserstoffreste mit 1 bis 10 Kohlenstoffatomen, die gegebenenfalls durch Halogenatome oder Cyanogruppen substituiert sind, bedeuten, $R^1$, gleich oder voneinander verschieden, für $C_1$-$C_{10}$-Kohlenwasserstoffreste stehen, $R^2$, gleich oder voneinander verschieden, Alkoxy- oder Polyalkoxyreste der Formel ZO oder ZOEO bedeuten, worin Z für einen $C_1$-$C_4$-Alkylrest steht, E für eine lineare oder verzweigte $C_2$-$C_4$-Alkylengruppe steht, a 0 oder 1 bedeutet und das Symbol r
eine Zahl mit einem Wert besitzt, der ausreicht, um dem Polymeren der Formel (2) eine Viskosität von 500 bis 1 000 000 mPa.s bei 25°C zu verleihen;

(2i) 0 bis 15 Teile zumindest eines Polyalkoxysilans der Formel

$R^{1}_{a} Si R^{2}_{3-a}$ (3)

worin $R^1$, $R^2$ und a die vorstehende Bedeutung besitzen;

(3i) 0 bis 250 Teile mineralische Füllstoffe

(4i) 0,001 bis 3 Teile eines Kondensationskatalysators

(5i) 0,001 bis 15 Teile zumindest einer Aminverbindung, die zumindest eine primäre oder sekundäre Aminfunktion trägt, ausgewählt unter den organischen Aminen mit einem pkb in wäßrigem Milieu von geringer als 5 und den Aminoorganosilanen und Aminoorgano-polysiloxanen, die je Molekül gleichzeitig enthalten

. zumindest eine organische $C_3$-$C_{15}$-Gruppe, die über eine SiC-Bindung an das Siliciumatom gebunden ist, und Träger zumindest einer Aminofunktion ist;

. und zumindest einen $C_1$-$C_5$-Alkoxyrest oder einen $C_3$-$C_6$-Alkoxyalkylenoxyrest; deren Aminfunktionen durch zumindest einen Stabilisator

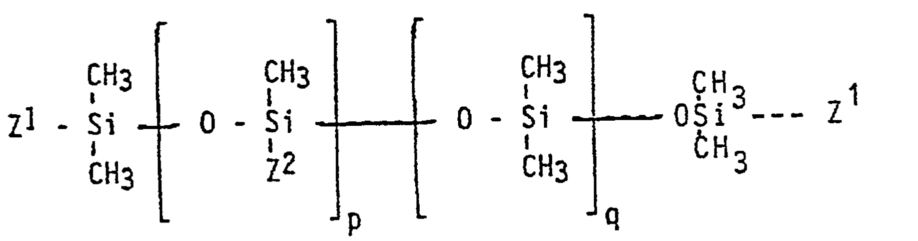 (1)

stabilisiert worden sind, worin

– p eine ganze Zahl zwischen 1 und 6 einschließlich, vorzugsweise zwischen 2 und 4 einschließlich, ist,

– q eine ganze Zahl zwischen 0 und 500, vorzugsweise zwischen 5 und 50 einschließlich ist,

– $Z^1$, die gleich oder voneinander verschieden sind, für einen Methylrest oder einen Rest $Z^2$ stehen,

– $Z^2$ ein Rest der Formel

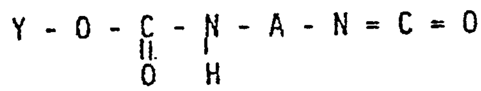

ist. worin
- Y eine lineare oder verzweigte Alkylenkette mit 1 bis 18 Kohlenstoffatomen, die gegebenenfalls durch eine Polyetherkette, ausgewählt unter Polyethylenoxid und Polypropylenoxid, verlängert ist, darstellt,
- A ein zweiwertiger Kohlenwasserstoffrest mit 2 bis 20 Kohlenstoffatomen einschließlich ist, und ein Kohlenwasserstoffrest eines Diisocyanatmoleküls darstellt.

2. Zusammensetzung gemäß Anspruch 1, dadurch gekennzeichnet, daß in der Formel (1) $Z^1$ Methyl bedeutet und A ausgewählt ist unter

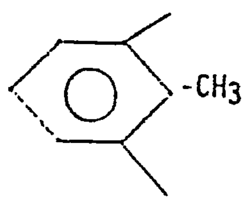

und

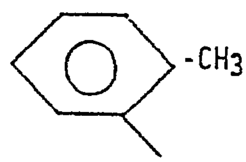

3. Zusammensetzung gemäß Anspruch 2, dadurch gekennzeichnet, daß Y ausgewählt ist unter $-(CH_2)_3$ und

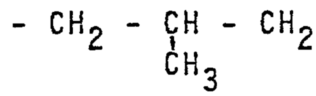

4. Zusammensetzung gemäß einem der Ansprüche 1 bis 3, dadurch gekennzeichnet, daß man 0,1 bis 30 Teile der stabilisierenden Verbindung der Formel (1) einsetzt.

5. Zusammensetzung gemäß einem der vorhergehenden Ansprüche, dadurch gekennzeichnet, daß (4i) eine Zinnverbindung ist.

6. Zusammensetzung gemäß einem der vorhergehenden Ansprüche, dadurch gekennzeichnet, daß sie außerdem 0,5 bis 10 Teile zumindest einer Aminoorganosilan- oder Aminoorganopolysiloxanverbindung (6i) enthält, die je Molekül zumindest eine organische $C_3$-$C_{15}$-Gruppe trägt, die über eine SiC-Bindung an das Siliciumatom gebunden ist und substituiert ist durch zumindest einen Aminorest mit einem tertiären Amin und/oder einem Guanidinorest und zumindest eine $C_1$-$C_5$-Alkoxygrupppe oder eine $C_3$-$C_6$-Alkoxyalkylenoxygruppe.

7. Zusammensetzung gemäß Anspruch 6, dadurch gekennzeichnet, daß die Verbindung (6i) der Formel

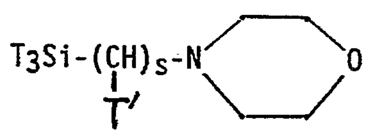

entspricht, worin die Reste T, gleich oder voneinander verschieden, ausgewählt sind unter einem Alkyl- und Alkoxyrest mit einschließlich 1 bis 4 Kohlenstoffatomen, wobei zumindest zwei der Reste T Alkoxyreste sind, T', gleich oder voneinander verschieden, ausgewählt sind unter einem Wasserstoffatom und einem Alkylrest mit 1 bis 3 Kohlenstoffatomen einschließlich, und s eine ganze Zahl zwischen 3 und 10 einschließlich ist.

**Claims**

1. Single-component organopolysiloxane composition capable of being vulcanized at room temperature, stable in storage in the absence of moisture and capable of being converted into an elastomer in the presence of moisture, characterized in that it comprises:
(i) - 100 parts of at least one diorganopolysiloxane polymer of formula:

$R^2{}_{3-a}R^1{}_aSi(OSiR_2)_rOSiR^1{}_aR^2{}_{3-a}$ (2)

in which R, which are identical or different, denote hydrocarbon radicals containing from 1 to 10 carbon atoms optionally substituted by halogen atoms or cyano groups, $R^1$, which are identical or different, denoting $C_1$-$C_{10}$ hydrocarbon radicals, $R^2$, which are identical or different, denote alkoxy or polyalkoxy radicals of formulae ZO or ZOEO, in which Z denotes a $C_1$-$C_4$ alkyl radical, E a $C_2$-$C_4$ linear or branched alkylene radical, a denotes zero or 1 and the symbol r a number which has a sufficient value to give the polymer of formula (2) a viscosity of 500 to 1,000, 000 mPa s at 25°C,
(ii) – 0 to 15 parts of at least one polyalkoxysilane of formula:

$R^1_aSiR^2_{3-a}$ (3)

in which $R^1$, $R^2$ and a have the above meaning,
(iii) – 0 to 250 parts of inorganic fillers,
(iv) – 0.001 to 3 parts of a condensation catalyst,
(v) – 0.001 to 15 parts of at least one amino compound carrying at least one primary or secondary amine functional group, chosen from organic amines which have a pkb lower than 5 in aqueous media and aminoorganosilanes and aminoorganopolysiloxanes carrying, per molecule, at the same time:
at least one $C_3$-$C_{15}$ organic group bonded by a SiC bond to the silicon atom and carrying at least one amino functional group, at least one $C_1$-$C_5$ alkoxy radical or a $C_3$-$C_6$ alkoxyalkyleneoxy radical, in which the amine functional groups have been neutralized by at least one stabilizer of formula:

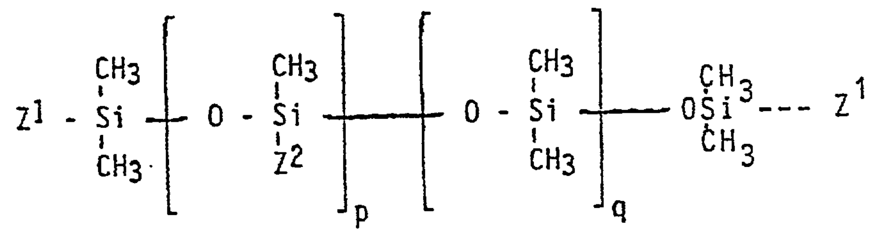 (1)

in which:
– p is an integer between 1 and 6 inclusive, preferably between 2 and 4 inclusive,
– q is an integer between 0 and 500, preferably between 5 and 50 inclusive,
– $Z^1$, which are identical or different, denote a methyl radical or a radical $Z^2$,
– $Z^2$ is a radical of formula:

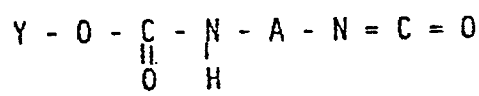

in which:
– Y is a linear or branched alkylene chain link containing from 1 to 18 carbon atoms, optionally extended by a polyether chain link chosen from polyethylene oxide and polypropylene oxide,
– A is a divalent hydrocarbon radical containing from 2 to 20 carbon atoms inclusive and denoting an hydrocarbon radical of a diisocyanate molecule.

2. Composition according to claim 1, characterized in that in formula (1) $Z^1$ is a methyl radical and A is chosen from:

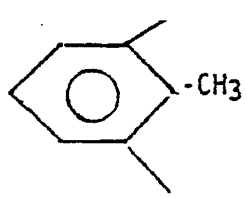 and 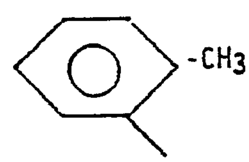

3. Composition according to Claim 2, characterized in that Y is chosen from $-(CH_2)_3-$ and

$-(CH_2)_3-$ and 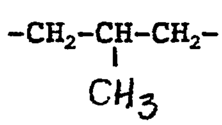

4. Composition according to one of Claims 1 to 3, characterized in that from 0.1 to 30 parts of stabilizing compound of formula (1) are employed.

5. Composition according to any one of the preceding claims, characterized in that (iv) is a tin compound.

6. Composition according to any one of the preceding claims, characterized in that it additionally comprises from 0.5 to 10 parts of at least one aminoorganosilane or aminoorganopolysiloxane compound (vi) carrying, per molecule, at least one $C_3$-$C_{15}$ organic group bonded by a SiC bond to the silicon atom and substituted by at least one amino radical containing a tertiary amine and/or a guanidino radical and at least one $C_1$-$C_5$ alkoxy radical or a $C_3$-$C_6$ alkoxyalkyleneoxy radical.

7. Composition according to Claim 6, characterized in that the compound (vi) corresponds to the formula:

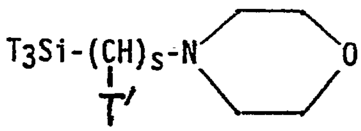

in which the radicals T, which are identical or different, are chosen from an alkyl and alkoxy radical containing from 1 to 4 carbon atoms inclusive, at least two of the radicals T being alkoxy radicals, T′, which are identical or different, are chosen from the hydrogen atom and an alkyl radical containing from 1 to 3 carbon atoms inclusive and s is an integer between 3 and 10 inclusive.